# EUROPEAN PATENT SPECIFICATION

(11) **EP 2 505 353 B1**
(45) Date of publication and mention of the grant of the patent: **30.05.2018**
(21) Application number: 12160954.9
(22) Date of filing: 23.03.2012
(51) Int. Cl.: B32B 27/36, E04F 15/10

(54) **Method for producing polyethylene terephthalate (PETG), tile made of PETG, and method for manufacturing the tile.**
Verfahren zur Herstellung von Polyethylen-Terephthalat (PETG), Fliese aus PETG und Herstellungsverfahren für die Fliese
Procédé de production de téréphtalate de polyéthylène (PETG), carreau constitué de PETG et procédé de fabrication du carreau

(30) Priority: 01.04.2011 TW 100111548
(43) Date of publication of application: 03.10.2012
(73) Proprietor: King-Tile Corp., Taoyuan County 32842 (TW)
(72) Inventor: Wu, Kuo-Min, 32842 Taoyuan County (TW)
(74) Representative: Perani & Partners S.p.A.

(56) References cited:
- WO-A1-03/024715
- WO-A1-2009/134403
- US-A- 4 612 074
- US-A- 5 643 666
- US-A1- 2002 146 954
- US-A1- 2002 160 680
- US-A1- 2003 065 075
- US-A1- 2008 081 158
- US-A1- 2008 081 882
- US-A1- 2009 274 919
- US-B1- 6 551 699
- DATABASE WPI Week 200454 Thomson Scientific, London, GB; AN 2004-555987 XP002678802, -& JP 2004 196967 A (FUKUBI KAGAKU KOGYO KK) 15 July 2004 (2004-07-15)

## Description

### FIELD OF THE INVENTION

The present invention relates to a tile and a manufacturing method thereof, and more particularly, to a tile that meets environmental protection needs, is suitable for the use in different locations, and easy in installation, and a method for manufacturing the tile. Also, the present invention relates to a method for producing polyethylene terephthalate (PETG).

### BACKGROUND OF THE INVENTION

People use different floor coverings in interior decoration. In view of the environmental issue has been paid more and more attention universally, to select an environmental friendly floor covering has become a main trend nowadays.

At present, the floor tiles made of Polyvinylchloride (PVC) gain the main market share of the floor coverings. It is mainly because of easy processing and low raw material cost.

However, hydrogen chloride (HCI) is produced as a result of the combustion or decomposition of recycled PVC tiles, thereby contributing to acid rain and soil acidification. Furthermore, the plasticizer for use with PVC tiles is an endocrine disrupting chemical (EDC). Hence, PVC tiles are of concern for some international organizations, as substantiated in the Registration, Evaluation, Authorisation and Restriction of Chemicals (REACH) - a European Union regulation. Considering their tremendously great effect on environments and lives, the aforesaid chemical substances will be subjected to further restriction of use in the near future.

At present PVC free floor tiles, such as tiles made of polypropylene (PP), polyethylene (PE) and Surlyn have the problem on installation. Due to the molecular surface tension of PP, PE and Surlyn, the tiles are not easy to adhere to the floors and cause a great deal of failures in installation.

Therefore, it is imperative to invent a kind of floor tile and a manufacturing method to meet the environmental friendly requirement and meanwhile, easy adhesion in installation.

JP 2004196967 A discloses flooring tiles comprising PET tile comprising: a surface protecting layer, a printing layer, and a base material layer, wherein the surface protecting layer, the printing layer, and the base material layer are laminated to each other in sequence, and the surface protecting layer, the printing layer, and the base material layer comprise PET. US 5643666 A1 discloses the use of PETG in multilayered building materials with surface and print layers.

US 4612074 A discloses standard steps in compounding and molding of a composite vinyl tile. US 2003/065075 A1 and US 6551699 B1 disclose the calendering of PETG. However, these three documents do not teach a method for manufacturing a tile with enhanced mechanical strength, lower fragility, and price advantage.

### SUMMARY OF THE INVENTION

In order to improve the disadvantage of the traditional floor tiles in installation and meet the environmental friendly requirement, the inventor has put lots of efforts and invented a kind of floor tile made of polyethylene terephthalate (Terephthalic Acid) PETG and a method.of producing this kind of floor tile.

It is a primary objective of the present invention to provide a kind of floor tile made of PETG and a method of producing this kind of tiles to meet the environmental friendly requirement and meanwhile, easy adhesion in installation.

In order to achieve the above and other objectives, the present invention provides a tile comprising a protecting layer, a printing layer, and a filler layer. The protecting layer, the printing layer, and the filler layer are laminated to each other in sequence. The protecting layer, the printing layer, and the filler layer are made of PETG.

The tile is made of PETG and therefore, meet the environmental friendly requirement, is suitable for use in different locations, and meanwhile, easy adhesion in installation.

In this regard, PETG is an environmentally friendly raw material which is conducive to environmental protection, capable of reuse, and effective in reducing consumption of resources.

Furthermore, a method for manufacturing a tile according to the present invention comprises the steps of:
providing a protecting layer, a printing layer, and a filler layer, wherein the protecting layer, the printing layer, and the filler layer are made of PETG;
laminating the protecting layer, the printing layer, and the filler layer to form a semi-finished tile product; and
stress-releasing the semi-finished tile product to form a tile.

Furthermore, a method for producing PETG according to the present invention comprises the steps of:
mixing PETG particles and at least one additive raw material to form a mixed raw material;
kneading the mixed raw material to form a gelatinized raw material;
fluxing the gelatinized raw material;
filtering the gelatinized raw material thus fluxed;
secondarily fluxing the gelatinized raw material thus filtered to form a plastic dough;
calendering the plastic dough to form a plastic fabric;
embossing the plastic fabric;
cooling the plastic fabric; and
cutting the plastic fabric.

### BRIEF DESCRIPTION OF THE DRAWING

Objectives, features, and advantages of the present invention are hereunder illustrated with specific embodiments in conjunction with the accompanying drawings, in which:
FIG. 1 is an exploded view of an embodiment according to the present invention;
FIG. 2 is a perspective view of an embodiment according to the present invention;
FIG. 3 is a flowchart of a process of an embodiment according to the present invention;
FIG. 4 is a schematic view of cutting of an embodiment according to the present invention;
FIG. 5 is a schematic view of a hydraulic laminating device of an embodiment according to the present invention;
FIG. 6 is a schematic view of a stress-releasing tank of an embodiment according to the present invention;
FIG. 7 is a schematic view of a PETG film forming process of an embodiment according to the present invention; and
FIG. 8 is a flowchart of a PETG film forming process of an embodiment according to the present invention.

### DETAILED DESCRIPTION OF THE PREFERRED EMBODIMENTS

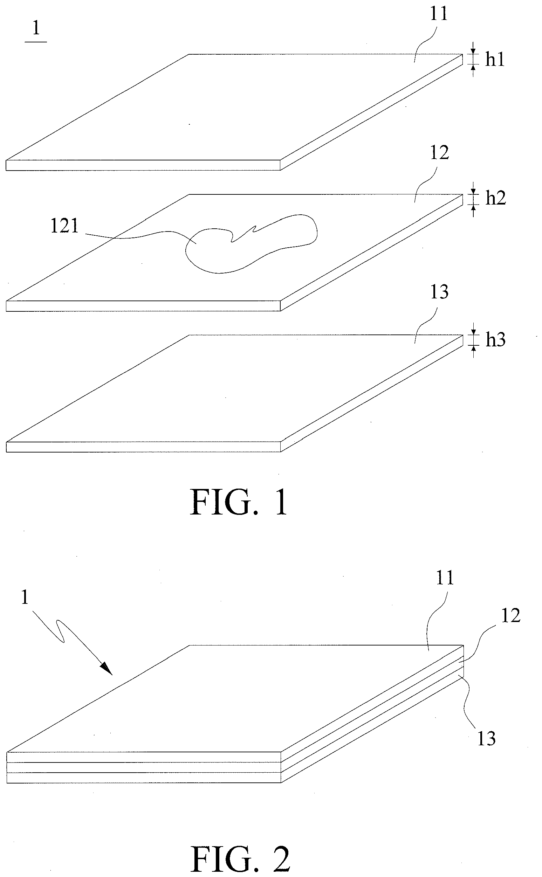

Referring to FIG. 1 and FIG. 2, there is shown in FIG. 1 an exploded view of an embodiment according to the present invention, and there is shown in FIG. 2 a perspective view of an embodiment according to the present invention.

As shown in the drawings, a tile 1 comprises a protecting layer 11, a printing layer 12, and a filler layer 13. The protecting layer 11, the printing layer 12, and the filler layer 13 are laminated to each other in sequence. The protecting layer 11, the printing layer 12, and the filler layer 13 are made of polyethylene terephthalate (PETG).

PETG is produced by replacing a portion of ethylene glycol with 1,4-cyclohexanedimethanol (CHDM) to obtain a product and then performing copolymerization on the product and p-benzenedicarboxylic acid. A PETG finished product is of high transparency, high resistance to an impact, high rigidity, high hardness, and high toughness, not to mention that it can even maintain an expected degree of toughness at a low temperature. At present, PETG is increasingly applied to foods production, medicine, drug making, cosmetic, packaging, etc. PETG can be treated with various processing techniques, such as extrusion, injection molding, blow molding, etc. Furthermore, relatively cheap calcium carbonate can be added to PETG so as to reduce the total cost thereof and change the high rigidity, high hardness, and high viscoelasticity of PETG at normal temperature.

Hence, a tile that meets environmental protection needs, is suitable for the use in different locations, and easy in installation. In this regard, PETG is an environmentally friendly raw material which is conducive to environmental protection, capable of reuse, and effective in reducing consumption of resources.

Specifically speaking, the tile 1 made of PETG is applicable to different locations, such as commercial areas or residential areas, and can substitute for the traditional PVC tiles. Also, PETG, with which the tile 1 is made of, is highly compatible with PVC; hence, the PVC tile industries can easily replace the traditional PVC tiles with the tile 1 made of PETG without adding any new processing process. Furthermore, the surface tension issue on the tiles made of PP, PE, and Surlyn products will not occur on the tile 1 made of PETG. Furthermore, due to the compatibility of PETG with PVC, the tile 1 made of PETG performs easy adhesion during installation.

The protecting layer 11 offers wear resistance function. It can protect the printing layer 12 to prevent from wearing off.the printing designs of the tiles. As shown in FIG. 1, the protecting layer 11 is in a thickness of h1, and the thickness h1 range is between 0.15 mm and 2.0 mm. The protecting layer 11 can be a pure transparent PETG film or a solid color PETG film.

The printing layer 12 is essentially a PETG film. Various patterns can be printed on the printing layer 12, such as: nature wood, stone, marble....etc. The printing layer 12 is in a thickness h2, and the thickness h2 range is between 0.09mm and 0.15mm.

The filler layer 13 is essentially composed of plenty of filling substances, such as calcium carbonate, PETG, benzoate, and a modifying agent, which are fully mixed to form the filler layer 13. In doing so, not only the overall rigidity or flexibility of the tile 1 is enhanced, but cost reduction is achieved. As shown in FIG. 1, the filler layer 13 is in a thickness h3, and the thickness h3 range is between 0.7mm and 4.0mm. According to different market demands, the filler layer 13 consists of multiple layers laminated to each other.

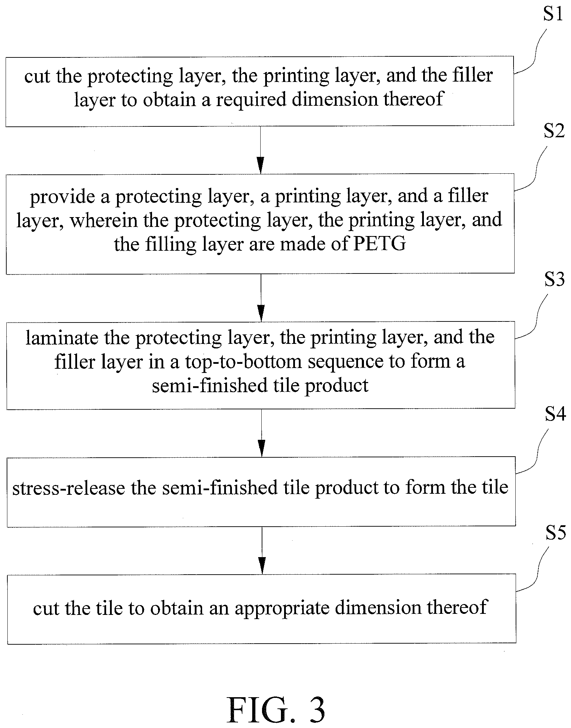

Referring to FIG. 1 through FIG. 3, there is shown in FIG. 3 a flowchart of a process of an embodiment according to the present invention.

As shown in the drawing, a method for manufacturing the tile 1 comprises the steps of:
first, providing a protecting layer 11, a printing layer 12, and a filler layer 13, wherein the protecting layer 11, the printing layer 12, and the filler layer 13 are made of PETG (S2); then, laminating the protecting layer 11, the printing layer 12, and the filler layer 13 to form a semi-finished tile product (S3); and stress-releasing the semi-finished tile product to form the tile 1 (S4).

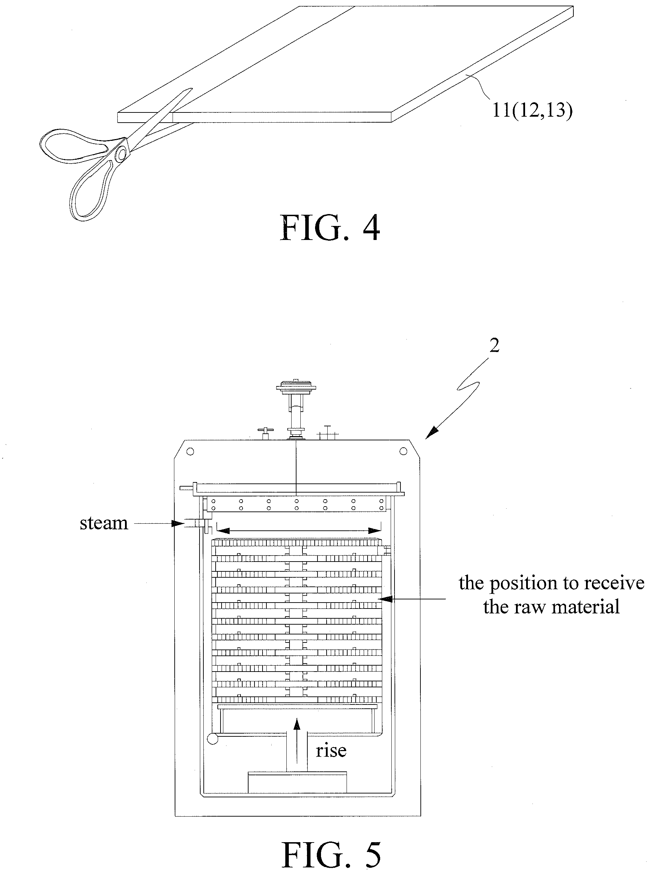

Referring to FIG. 1 through FIG. 4, there is shown in FIG. 4 a schematic view of cutting of an embodiment according to the present invention.

In practice, the method for manufacturing the tile 1 further comprises, before the step of providing the protecting layer 11, the printing layer 12, and the filler layer 13, the step of cutting the protecting layer 11, the printing layer 12, and the filler layer 13 to obtain a required dimension thereof (S1), as shown in FIG. 4, that is, cutting the protecting layer 11, the printing layer 12, and the filler layer 13 to obtain a required dimension thereof as needed.

In practice, the method for manufacturing the tile 1 further comprises, after the step of stress-releasing the semi-finished tile product, the step of cutting the tile 1 to obtain an appropriate dimension thereof (S5), that is, cutting the tile 1 to obtain an appropriate dimension thereof as required for flooring a home (in a manner shown in FIG. 4).

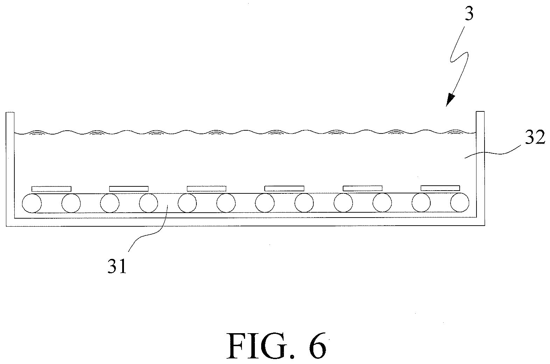

Referring to FIG. 1 through FIG. 6, there is shown in FIG. 5 a schematic view of a hydraulic laminating device of an embodiment according to the present invention, and there is shown in FIG. 6 a schematic view of a stress-releasing tank of an embodiment according to the present invention.

As shown in FIG. 5, the protecting layer 11, the printing layer 12, and the filler layer 13 are laminated to each other by a hydraulic laminating device 2. The temperature, pressure, time, etc. of the hydraulic lamination of the protecting layer 11, the printing layer 12, and the filler layer 13 can be set according to the material characteristics thereof.

As shown in FIG. 6, the step of stress-releasing the semi-finished tile product is performed by a stress-releasing tank 3. In practice, the stress-releasing tank 3 is a partly open container. The stress-releasing tank 3 is provided therein with a continuous conveyor belt 31 made of stainless steel. The stress-releasing tank 3 is filled with hot water 32. The temperature of the hot water 32 can be adjusted to fall within a temperature range, such as 80°C ∼ 100°C, according to the material characteristics of the protecting layer 11, the printing layer 12, and the filler layer 13. The water level of the hot water 32 has to be at least 15cm higher than the conveyor belt 31. The hydraulic laminated semi-finished tile product is positioned at a starting end of the conveyor belt 31. Then, the conveyor belt 31 carries the semi-finished tile product in a manner that the semi-finished tile product is immersed in the hot water 32. Finally, the semi-finished tile product is removed from the hot water 32 at the other end of the conveyor belt 31. After being removed from the hot water 32, the semi-finished tile product is wiped and stacked to finalize the stress-releasing step. One of the features of the working principle of the stress-releasing step is: the shaping of thermoplastic plastics (polymers) is always accompanied by residual stress, and the residual stress does not vanish even after the hydraulic laminating process is finished; if residual stress exists in a material, it will have an adverse effect on the size of a finished product. The hot water 32 functions as a medium for the stress-releasing tank 3. A real test confirms that: PETG does not react with the hot water 32, nor does the hot water 32 enter interstices of PETG. Hence, according to the present invention, the hydraulic laminated semi-finished tile product is heated up to approximate the transition temperature of PETG so as to release the residual stress therein and effectuate the stability of the size of a finished tile product.

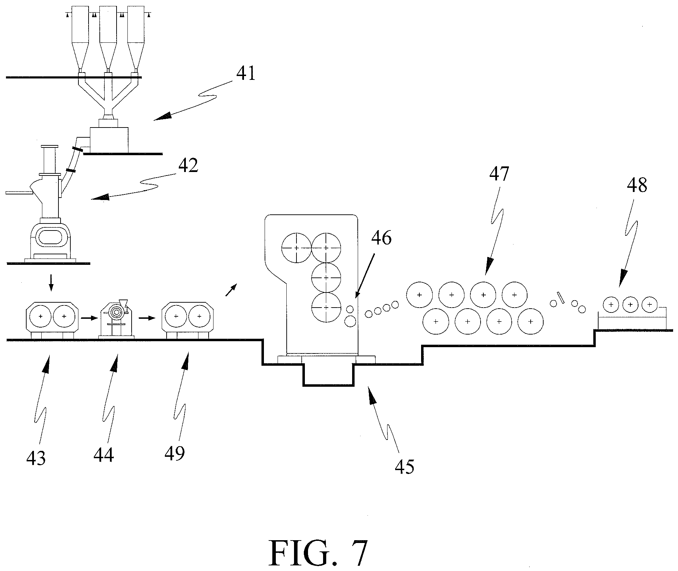

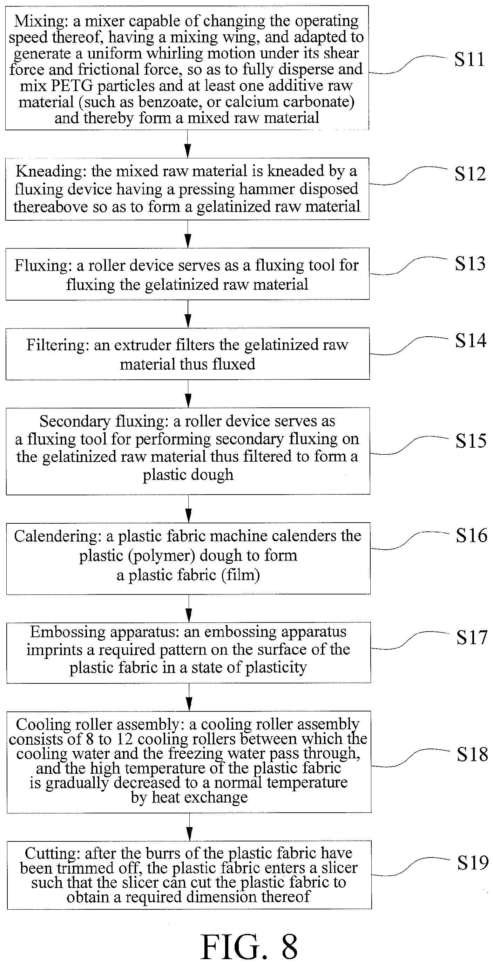

Referring to FIG. 7 and FIG. 8, there is shown in FIG. 7 a schematic view of a PETG film forming process of an embodiment according to the present invention, and there is shown in FIG. 8 a flowchart of a PETG film forming process of an embodiment according to the present invention.

The protecting layer 11, the printing layer 12, and the filler layer 13 (shown in FIG. 1) are made of PETG, and the PETG film forming process is as follows:
1. Mixing: a mixer 41 capable of changing the operating speed thereof, having a mixing wing, and adapted to generate a uniform whirling motion under its shear force and frictional force, so as to fully disperse and mix PETG particles and at least one additive raw material (such as benzoate, or calcium carbonate) and thereby form a mixed raw material (S11).
2. Kneading: the mixed raw material is kneaded by a fluxing device 42 having a pressing hammer disposed thereabove so as to form a gelatinized raw material (S12). The chamber of the fluxing device 42 accommodates two rotors each having a hunched wing-like structure, and the two rotors rotate in a direction opposite to each other. The strong cutting operation is performed between an axle and the chamber wall and between a rotor and another rotor; hence, heat is generated for performing the fluxing process. The aforesaid kneading process is like kneading flour to form a flour dough. PETG molecules become soft when heated and under an applied force. A softening agent reacts with PETG molecules and fluxes with other materials to form viscous and elastic plastics.
3. Fluxing: a roller device 43 serves as a fluxing tool for fluxing the gelatinized raw material (S13). The roller device 43 consists of two rollers capable of changing the operating speed thereof and being heated. The degree of gelatinization is enhanced by heating the raw materials continuously and performing crosscut manually and repeated. Furthermore, the mixed raw materials are cut by means of the difference in the speed between the two rollers. The front roller is heated up to a temperature slightly higher than the rear roller is, such that the raw materials can be conveyed in a specific direction.
4. Filtering: an extruder 44 filters the gelatinized raw material thus fluxed (S14). A filtering wire gauze is installed at the outlet, which manifests three features as follows:
   i. providing an appropriate temperature and feeding an evenly gelatinized material into a plastic fabric machine;
   ii. fending off rigid bodies, such as stones or iron scraps, to protect the plastic fabric machine and prevent the rollers from being damaged; and
   iii. maintaining a uniform temperature of the plastic materials to keep the temperature constant rather than rising.
5. Secondary fluxing: a roller device 49 serves as a fluxing tool for performing secondary fluxing on the gelatinized raw material thus filtered to form a plastic dough (S15).
6. Calendering: a plastic fabric machine 45 calenders the plastic (polymer) dough to form a plastic fabric (S16). The plastic dough enters the plastic fabric machine 45 by passing through a nip between the first roller and the second roller, such that the plastic dough is compressed to take on a sheet-like appearance. The sheet-like plastic dough winds around the second roller to enter a nip between the second roller and the third roller. After leaving the nip between the second roller and the third roller, the plastic dough winds around the third roller to enter a nip between the third roller and the fourth roller. Upon its entry into a nip between two rollers, the plastic dough always leaves behind a trace (known as a bank) thereof. The bank rotates together with the rollers. The calendaring can be completed only in the presence of the continuity of three banks.
7. Embossing apparatus: an embossing apparatus 46 imprints a required pattern on the surface of the plastic fabric in a state of plasticity (S17). The axle has therein a water conveying duct, and the water temperature can be set as needed. The temperature is decreased while the embossing process is underway, such that an embossed pattern is fixed in place.
8. Cooling roller assembly: a cooling roller assembly 47 consists of 8 to 12 cooling rollers between which the cooling water and the freezing water pass through. The high temperature of the plastic fabric is gradually decreased to a normal temperature by heat exchange (S18). The temperature of the cooling rollers is distributed in the manner that it decreases from the front roller to the rear roller. If the water flows from the front to the rear in the same direction as the plastic fabric does, the temperature will decrease gradually.
9. Cutting: after the burrs of the plastic fabric have been trimmed off, the plastic fabric enters a slicer 48 such that the slicer 48 can cut the plastic fabric to obtain a required dimension thereof (S19). In addition to cutting, the slicer 48 performs calculation of the total length of a resultant slice.

Hence, the present invention meets the three requirements of patentability, namely novelty, non-obviousness, and industrial applicability. Regarding novelty and non-obviousness, the present invention discloses a tile made of PETG, so that the tile meets environmental friendly requirement, is suitable for the uses in different locations, and meanwhile, easy adhesion in installation. Regarding industrial applicability, products derived from the present invention fully meet current market demands.

The present invention is disclosed above by preferred embodiments. However, persons skilled in the art should understand that the preferred embodiments are illustrative of the present invention only, but should not be interpreted as restrictive of the scope of the present invention. Hence, all equivalent modifications and replacements made to the aforesaid embodiments should fall within the scope of the present invention. Accordingly, the legal protection for the present invention should be defined by the appended claims.

## Claims

1. A tile made of PETG, the tile comprising:
a protecting layer;
a printing layer; and
a filler layer;
wherein the protecting layer, the printing layer, and the filler layer are laminated to each other in sequence, and the protecting layer, the printing layer, and the filler layer are made of PETG; and
wherein the filler layer comprises calcium carbonate and benzoate.

2. The tile of claim 1, wherein the protecting layer is of a thickness ranging between 0.1mm and 2.0mm.

3. The tile of claim 1, wherein the printing layer is of a thickness ranging between 0.09mm and 0.15mm.

4. The tile of claim 1, wherein the filler layer is of a thickness ranging between 0.7mm and 4.0mm.

5. The tile of claim 1, wherein the protecting layer is transparent.

6. The tile of claim 1, wherein the printing layer has a printed pattern.

7. A method for manufacturing a tile made of PETG, the method comprising the steps of:
providing a protecting layer, a printing layer, and a filler layer, wherein the protecting layer, the printing layer, and the filler layer are made of PETG and the filler layer comprises calcium carbonate and benzoate;
laminating the protecting layer, the printing layer, and the filler layer to each other so as to form a semi-finished tile product; and
stress-releasing the semi-finished tile product to form a tile. by heating up the semi-finished tile product to approximate the transition temperature of PETG.

8. The method of claim 7, further comprising, before the step of providing the protecting layer, the printing layer, and the filler layer, the step of cutting the protecting layer, the printing layer, and the filler layer to obtain a required dimension thereof.

9. The method of claim 7, further comprising, after the step of stress-releasing the semi-finished tile product, the step of cutting the tile to obtain an appropriate dimension thereof.

10. The method of claim 7, wherein the step of laminating the protecting layer, the printing layer, and the filler layer is performed by a hydraulic laminating device.

11. The method of claim 7, wherein the step of stress-releasing the semi-finished tile product is performed by a stress-releasing tank.

12. A method for producing PETG, the method comprising the steps of:
mixing PETG particles, calcium carbonate and benzoate;
kneading the mixed raw material to form a gelatinized raw material;
fluxing the gelatinized raw material;
filtering the gelatinized raw material thus fluxed;
secondarily fluxing the gelatinized raw material thus filtered to form a plastic dough;
calendering the plastic dough to form a plastic fabric;
embossing the plastic fabric;
cooling the plastic fabric; and
cutting the plastic fabric.

13. The method of claim 12, wherein the step of mixing PETG particles, calcium carbonate and benzoate is performed by a mixer.

14. The method of claim 12, wherein the step of kneading the mixed raw material is performed by a fluxing device.

15. The method of claim 12, wherein the step of fluxing the gelatinized raw material is performed by a roller device.

16. The method of claim 12, wherein an extruder filters the gelatinized raw material thus fluxed.

17. The method of claim 12, wherein a plastic fabric machine calenders the plastic dough.

18. The method of claim 12, wherein an embossing apparatus embosses the plastic fabric.

19. The method of claim 12, wherein a cooling roller assembly cools the plastic fabric.

20. The method of claim 12, wherein a slicer cuts the plastic fabric.

## Patentansprüche

1. Eine Fliese aus PETG, wobei die Fliese umfasst:
eine Schutzschicht;
eine Druckschicht; und
eine Füllschicht;
wobei die aufeinander folgende Schutzschicht, Druckschicht und Füllschicht aufeinander laminiert werden und die Schutzschicht, die Druckschicht und die Füllschicht aus PETG hergestellt werden; und
wobei die Füllschicht Calciumcarbonat und Benzoat umfasst.

2. Fliese nach Anspruch 1, wobei die Schutzschicht eine Dicke im Bereich zwischen 0,1 mm und 2,0 mm aufweist.

3. Fliese nach Anspruch 1, wobei die Druckschicht eine Dicke im Bereich zwischen 0,09 mm und 0,15 mm aufweist.

4. Fliese nach Anspruch 1, wobei die Füllschicht eine Dicke im Bereich zwischen 0,7 mm und 4,0 mm aufweist.

5. Fliese nach Anspruch 1, wobei die Schutzschicht transparent ist.

6. Fliese nach Anspruch 1, wobei die Druckschicht ein gedrucktes Muster aufweist.

7. Verfahren zur Herstellung einer Fliese aus PETG, wobei das Verfahren die folgenden Schritte umfasst:
Bereitstellen einer Schutzschicht, einer Druckschicht und einer Füllschicht, wobei die Schutzschicht, die Druckschicht und die Füllschicht aus PETG hergestellt werden und die Füllschicht Calciumcarbonat und Benzoat umfasst;
Laminieren der Schutzschicht, der Druckschicht und der Füllschicht aufeinander, um ein halbfertiges Fliesenprodukt zu bilden; und
Spannungsfreisetzen des halbfertigen Fliesenproduktes zur Bildung einer Fliese durch Erhitzen des halbfertigen Fliesenproduktes auf ungefähr die Übergangstemperatur von PETG.

8. Verfahren nach Anspruch 7, ferner umfassend, vor dem Schritt des Bereitstellens der Schutzschicht, der Druckschicht und der Füllschicht, den Schritt des Schneidens der Schutzschicht, der Druckschicht und der Füllschicht, um eine erforderliche Abmessung davon zu erhalten.

9. Verfahren nach Anspruch 7, ferner umfassend, nach dem Schritt des Entspannungsfreisetzens des halbfertigen Fliesenprodukts, den Schritt des Schneidens der Fliese, um eine geeignete Abmessung davon zu erhalten.

10. Verfahren nach Anspruch 7, wobei der Schritt des Laminierens der Schutzschicht, der Druckschicht und der Füllschicht durch eine hydraulische Laminiervorrichtung durchgeführt wird.

11. Verfahren nach Anspruch 7, wobei der Schritt des Spannungsfreisetzens des halbfertigen Fliesenproduktes durch einen spannungsfreisetzenden Tank durchgeführt wird.

12. Verfahren zur Herstellung von PETG, wobei das Verfahren die Schritte umfasst:
Mischen von PETG-Teilchen, Calciumcarbonat und Benzoat;
Kneten des gemischten Rohmaterials, um ein gelatiniertes Rohmaterial zu bilden;
Fluxen des gelatinierten Rohmaterials;
Filtrieren des so gefluxten gelatinierten Rohmaterials;
sekundäres Fluxen des so filtrierten gelatinierten Rohmaterials, um einen Kunststoffteig zu bilden;
Kalandern des Kunststoffteigs zur Bildung eines Kunststoffgewebes;
Prägen des Kunststoffgewebes;
Abkühlen des Kunststoffgewebes; und
Schneiden des Kunststoffgewebes.

13. Verfahren nach Anspruch 12, wobei der Schritt des Mischens von PETG-Teilchen, Calciumcarbonat und Benzoat durch einen Mischer durchgeführt wird.

14. Verfahren nach Anspruch 12, wobei der Schritt des Knetens des gemischten Rohmaterials durch eine Befluxungseinrichtung durchgeführt wird.

15. Verfahren nach Anspruch 12, wobei der Schritt des Fluxens des gelatinierten Rohmaterials durch eine Walzenvorrichtung durchgeführt wird.

16. Verfahren nach Anspruch 12, wobei ein Extruder das so gefluxte gelatinierte Rohmaterial filtriert.

17. Verfahren nach Anspruch 12, wobei eine Kunststoffgewebemaschine den Kunststoffteig kalandert.

18. Verfahren nach Anspruch 12, wobei eine Prägevorrichtung das Kunststoffgewebe prägt.

19. Verfahren nach Anspruch 12, wobei eine Kühlwalzenanordnung das Kunststoffgewebe kühlt.

20. Verfahren nach Anspruch 12, wobei eine Schneidemaschine das Kunststoffgewebe schneidet.

## Revendications

1. Une tuile en PETG, la tuile comprenant :
une couche de protection ;
une couche d'impression ; et
une couche de remplissage ;
où la couche de protection, la couche d'impression et la couche de remplissage sont stratifiées l'une sur l'autre en séquence, et la couche de protection, la couche d'impression et la couche de remplissage sont en PETG ; et
où la couche de remplissage comprend du carbonate de calcium et du benzoate.

2. Tuile selon la revendication 1, où la couche de protection a une épaisseur comprise entre 0,1 mm et 2,0 mm.

3. Tuile selon la revendication 1, où la couche d'impression a une épaisseur comprise entre 0,09 mm et 0,15 mm.

4. Tuile selon la revendication 1, où la couche de remplissage a une épaisseur comprise entre 0,7 mm et 4,0 mm.

5. Tuile selon la revendication 1, où la couche de protection est transparente.

6. Tuile selon la revendication 1, où la couche d'impression a un motif imprimé.

7. Procédé de fabrication d'une tuile en PETG, le procédé comprenant les étapes suivantes :
fournir une couche de protection, une couche d'impression et une couche de remplissage, où la couche de protection, la couche d'impression et la couche de remplissage sont en PETG et la couche de remplissage comprend du carbonate de calcium et du benzoate ;
stratifier la couche de protection, la couche d'impression et la couche de remplissage l'une sur l'autre de manière à former un produit semi-fini pour tuile ; et
soulager du stress le produit semi-fini pour tuile pour former une tuile en chauffant le produit semi-fini pour tuile pour se rapprocher de la température de transition du PETG.

8. Procédé selon la revendication 7, comprenant en outre, avant l'étape de fourniture de la couche de protection, de la couche d'impression et de la couche de remplissage, l'étape de découpe de la couche de protection, de la couche d'impression et de la couche de remplissage pour obtenir une dimension requise de celles-ci.

9. Procédé selon la revendication 7, comprenant en outre, après l'étape de soulagement du stress du produit semi-fini pour tuile, l'étape de découpe de la tuile pour obtenir une dimension appropriée de celle-ci.

10. Procédé selon la revendication 7, dans lequel l'étape de stratification de la couche de protection, de la couche d'impression et de la couche de remplissage est effectuée par un dispositif de stratification hydraulique.

11. Procédé selon la revendication 7, dans lequel l'étape de soulagement du stress du produit semi-fini pour tuile est effectuée par un réservoir de soulagement du stress.

12. Procédé de production de PETG, le procédé comprenant les étapes suivantes :
mélanger des particules de PETG, de carbonate de calcium et de benzoate ;
malaxer la matière première mélangée pour former une matière première gélatinisée ;
fluxer la matière première gélatinisée ;
filtrer la matière première gélatinisée ainsi fluxée ;
fluxer secondairement la matière première gélatinisée ainsi filtrée pour former une pâte plastique ;
calandrer la pâte plastique pour former un tissu plastique ;
gaufrer le tissu plastique ;
refroidir le tissu plastique ; et
couper le tissu plastique.

13. Procédé selon la revendication 12, dans lequel l'étape de mélange de particules de PETG, de carbonate de calcium et de benzoate est réalisée par un mélangeur.

14. Procédé selon la revendication 12, dans lequel l'étape de malaxage de la matière première mélangée est réalisée par un dispositif de fluxage.

15. Procédé selon la revendication 12, dans lequel l'étape de fluxage de la matière première gélatinisée est réalisée par un dispositif à rouleau.

16. Procédé selon la revendication 12, dans lequel une extrudeuse filtre la matière première gélatinisée ainsi fluxée.

17. Procédé selon la revendication 12, dans lequel une machine à tissu plastique calandre la pâte plastique.

18. Procédé selon la revendication 12, dans lequel un appareil de gaufrage gaufre le tissu plastique.

19. Procédé selon la revendication 12, dans lequel un ensemble de rouleaux de refroidissement refroidit le tissu plastique.

20. Procédé selon la revendication 12, dans lequel une trancheuse découpe le tissu plastique.
